# EUROPEAN PATENT SPECIFICATION

(11) **EP 2 568 379 B1**
(45) Date of publication and mention of the grant of the patent: **27.04.2016**
(21) Application number: 11864625.6
(22) Date of filing: 27.10.2011
(51) Int. Cl.: G06F 9/50, G06F 12/08

(54) **METHOD FOR PREVENTING NODE CONTROLLER DEADLOCK AND NODE CONTROLLER**
VERFAHREN ZUR VERMEIDUNG VON KNOTENSTEUERUNGSAUSFÄLLEN UND KNOTENSTEUERUNG
PROCÉDÉ DE PRÉVENTION D'INTER-BLOCAGE DE CONTRÔLEUR DE NOEUD ET CONTRÔLEUR DE NOEUD

(43) Date of publication of application: 13.03.2013
(73) Proprietor: Huawei Technologies Co., Ltd., Longgang District Shenzhen, Guangdong 518129 (CN)
(72) Inventor: ZHAO, Yafei, Shenzhen Guangdong 518129 (CN); DAI, Ruoxing, Shenzhen Guangdong 518129 (CN); CHU, Xiaowei, Shenzhen Guangdong 518129 (CN)
(74) Representative: Kreuz, Georg Maria
(86) International application number: PCT/CN2011/081393
(87) International publication number: WO 2012/149812

(56) References cited:
- CN-A- 1 264 872
- CN-A- 101 621 714
- CN-A- 102 026 099
- US-A1- 2003 009 623
- US-A1- 2004 215 895
- US-A1- 2005 160 132
- US-A1- 2010 005 245
- US-A1- 2011 078 492

## Description

### FIELD OF THE INVENTION

The present invention relates to the computer field, and in particular, to a method for preventing deadlock of a node controller, and a node controller, which are applied to a non-uniform memory access (Non-Uniform Memory Access, NUMA) system.

### BACKGROUND OF THE INVENTION

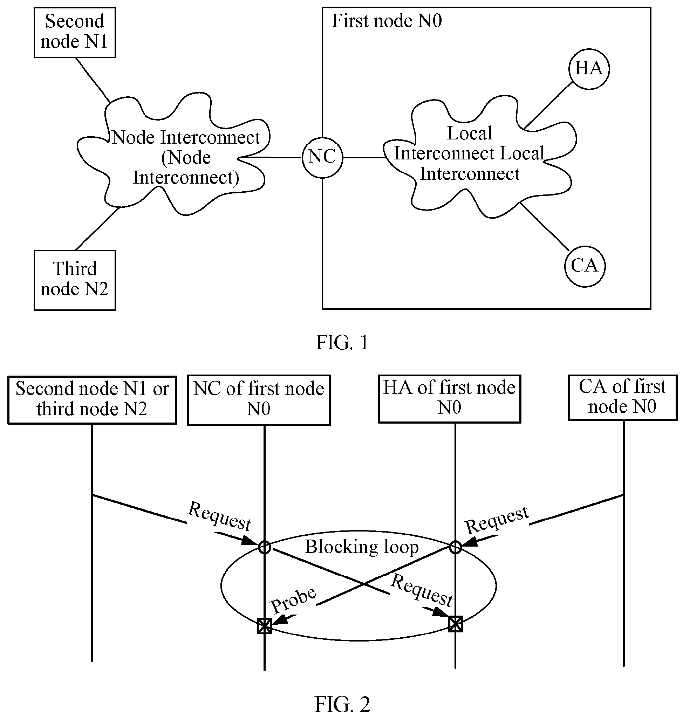

The structure of a conventional NUMA system is as shown in FIG. 1, where the system is constructed of three nodes: a first node N0, a second node N1, and a third node N2, and the three nodes are connected through a node network (Node Interconnect). The first node N0 includes a node controller (Node Controller, NC), a system memory (not shown in FIG. 1), a home agent (Home Agent, HA) configured to manage a system address of the system memory, a processor unit (not shown in FIG. 1), and a caching agent (Caching Agent, CA) of the processor unit. As shown in FIG. 1, the components in the first node N0 are locally interconnected (Local Interconnect), and the NC of the first node N0, the second node N1, and the third node N2 are in a node interconnection (Node Interconnect). The second node N1 and the third node N2 may be a node that only includes a processor unit and its CA, or may also be a complex node that has a structure similar to that of the first node N0.

In the NUMA system shown in FIG. 1, the HA of the first node N0 is configured to manage the system address of the system memory, and the CA of the first node N0, the second node N1, and the third node N2 may implement access to the system memory through the system address. Assume that the HA of the first node N0 manages a system address A and when the second node N1 and/or the third node N2 need to request the system address A, the second node N1 and/or the third node N2 needs to initiate a request message and transfer the request message to the NC of the first node N0, the NC of the first node N0 then transfers the request message to the HA of the first node N0, the HA of the first node N0 receives the request message and then transfers the system address A to the NC of the first node N0, and then the NC of the first node N0 transfers the system address A to the second node N1 and/or the third node N2. Further, assume that the system address A is already cached (Cached) in the second node N1 and when the CA of the first node N0 also needs to request the system address A, the CA of the first node N0 also needs to initiate a request message, and transfers the request message to the HA of the first node N0, the HA of the first node N0 receives the request message initiated by its CA and then needs to initiate an interception message, and transfers the interception message to the NC of the first node N0, and the NC of the first node N0 transfers the interception message to the second node N1. The second node N1 receives the interception message, and then transfers a feedback message to the NC of the first node N0, and then the NC of the first node N0 transfers the feedback message to the HA of the first node N0, so that the HA of the first node N0 learns that the system address A cached by the second node is valid, and further the HA of the first node N0 may transfer the system address A stored in itself to the CA of the first node N0 via a local network. Up to now, the HA of the first node N0 finishes processing of the request message initiated by the CA of the first node N0. In the foregoing procedure, the HA of the first node N0 learns that the system address A cached by the second node N1 is valid and then further transfers the system address A to the CA via the local network, so that the CA may use the system address A to access the system memory, which guarantees that the system address used by the CA of the first node N0 and the second node N1 is coherent, thereby satisfying a requirement for a cache coherence protocol (Cache Coherence Protocol) of the NUMA system.

In practice, it is found that in the NUMA system shown in FIG. 1, a queuing policy is set on the NC of the first node N0, and the request message Request from the second node N1 or the third node N2 first enters a processing queue, so that an interception message Probe initiated by the HA of the first node N0 might be blocked by the request message Request initiated by the second node N1 or the third node N2. Meanwhile, a queuing policy is also set on the HA of the first node N0, and a request message Request initiated by the CA of the first node N0 first enters a processing queue, so that a request message Request transferred by the NC of the first node N0 might also be blocked by the request message Request initiated by the CA of the first node N0. In this way, a blocking loop shown in FIG. 2 is formed between the NC and the HA of the first node N0, thereby resulting in NC deadlock of the first node N0, while the NC deadlock permanently consumes resources of the NUMA system, and eventually results in a crash of the NUMA system.

US 2005/160132 A1 relates to a system that includes a home node that provides a transaction reference to a requester in response to a request from the requester. The requester provides an acknowledgement message to the home node in response to the transaction reference, the transaction reference enabling the requester to determine an order of requests at the home node relative to the request from the requester.

D4: US20030009623 discloses a non-uniform memory access (NUMA) computer system. The NUMA computer system includes two or more nodes, each node including one or more processing units and a node controller. Each node controller serves as a local agent for other nodes.

US 2010/005245 A1 relates to a method and apparatus for preserving memory ordering in a cache coherent link based interconnect in light of partial and non-coherent memory accesses is herein 2 described.

### SUMMARY OF THE INVENTION

In order to overcome the foregoing defects, the present invention provides a method for preventing deadlock of a node controller, and a node controller, which are mainly applied to a NUMA system and are capable of preventing the deadlock of the node controller, thereby avoiding performance degradation or a crash of the NUMA system caused by the deadlock.

A method for preventing deadlock of a node controller and applied to a NUMA system includes:
receiving, by a node controller of a current node, a request message sent by any node, and writing the request message into a processing queue, where the request message is used for requesting a system address;
monitoring, by the node controller, whether a cache data block including the system address is cached on another node; and if yes, the node controller performing invalidation processing on the cache data block that includes the system address and is cached on the another node;
returning directly, by the node controller, when receiving a first interception message transferred by a home agent of the current node, a feedback message to the home agent, avoiding to write the first interception message into the processing queue which cause the queue not blocked by the request message, where the first interception message is used for intercepting whether the system address is cached on the another node; and the feedback message is used for indicating that the system address cached on the another node is invalid, so that the home agent transfers the system address stored in it to a caching agent of the current node; and
transferring, by the node controller, the request message written into the processing queue to the home agent of the current node.

A node controller is applied to a NUMA system, where the node controller is located in a local node of the NUMA system, and the node controller includes:
a receiving unit, configured to receive a request message sent by any node, and write the request message into a processing queue, where the request message is used for requesting a system address;
a monitoring unit, configured to monitor whether a cache data block including the system address is cached on another node;
a processing unit, configured to, when a monitoring result of the monitoring unit is yes, perform invalidation processing on the cache data block that includes the system address and is cached on the another node; where
the receiving unit is further configured to receive a first interception message transferred by a home agent of the local node, where the first interception message is used for intercepting whether the system address is cached on the another node;
a transfer unit, configured to, when the receiving unit receives the first interception message, directly return a feedback message to the home agent, and avoid to write the first interception message into a queue processing unit by the receiving unit which cause the queue not blocked by the request message, where the feedback message is used for indicating that the system address cached on the another node is invalid, so that the home agent transfers the system address stored in it to a caching agent of the local node;
the queue processing unit, configured to store the request message written by the receiving unit, where
the transfer unit is further configured to transfer, to the home agent, the request message written into the queue processing unit.

A NUMA system includes a local node and another node other than the local node, and the local node includes a node controller, a home agent, and a caching agent, where:
The node controller receives a request message from another node and writes the request message into a processing queue, where the request message is used for requesting a system address; the node controller monitors whether a cache data block including the system address is cached on the another node, and if yes, performs invalidation processing on the cache data block that includes the system address and is cached on the another node, so that the node controller directly returns, when receiving a first interception message transferred by the home agent, a feedback message to the home agent, so as to avoid that the first interception message is written into the processing queue and is blocked by the request message, where the first interception message is used for intercepting whether the system address is cached on the another node; and the feedback message is used for indicating that the system address cached on the another node is invalid, so that the home agent transfers the system address stored in it to the caching agent; and the node controller transfers, to the home agent, the request message written into the processing queue.

In the present invention, the node controller of the current node first monitors, after receiving the request message sent by any node and writing the request message into the processing queue, whether the cache data block including the system address is cached on another node. If it is found through monitoring that the cache data block including the system address is cached on the another node, the node controller performs the invalidation processing on the cache data block that includes the system address and is cached on the another node. When subsequently the node controller receives the first interception message transferred by the home agent of the current node, as the node controller has already invalidated the cache data block that includes the system address and is cached on the another node, the node controller does not need to transfer the first interception message to the another node and only needs to directly return a feedback message to the HA, so as to avoid that the first interception message is written into the processing queue by the node controller and is blocked by the request message, thereby breaking the blocking loop that the node controller and the HA depend on each other, preventing the deadlock from occurring to the node controller, and avoiding the crash of the NUMA system due to the deadlock of the node controller.

### BRIEF DESCRIPTION OF THE DRAWINGS

To illustrate the technical solutions according to the present invention more clearly, accompanying drawings of preferred embodiments are introduced briefly in the following. Obviously, the accompanying drawings in the following description show merely some preferred embodiments of the present invention.
FIG. 1 is a schematic structural diagram of a conventional NUMA system;
FIG. 2 is a schematic flow chart of deadlock occurring to an NC in a conventional NUMA system;
FIG. 3 is a schematic flow chart of a method for preventing deadlock of a node controller according to Embodiment 1 of the present invention;
FIG. 4 is a schematic flow chart of a method for preventing deadlock of a node controller according to Embodiment 2 of the present invention;
FIG. 5 is a schematic structural diagram of a node controller according to Embodiment 3 of the present invention;
FIG. 6 is a schematic structural diagram of another node controller according to Embodiment 3 of the present invention; and
FIG. 7 is a schematic structural diagram of a NUMA system according to Embodiment 4 of the present invention.

### DETAILED DESCRIPTION OF THE EMBODIMENTS

The technical solutions according to the embodiments of the present invention are clearly and completely described in the following with reference to the accompanying drawings of preferred embodiments of the present invention. Obviously, the embodiments described are only a part of rather than all of the embodiments of the present invention

The embodiments of the present invention provide a method for preventing deadlock of a node controller, a node controller, and a NUMA system, which may prevent deadlock of a node controller, and avoids a crash of the NUMA system due to the deadlock of the node controller. The illustration is given in the following by using the specific embodiments.

### Embodiment 1

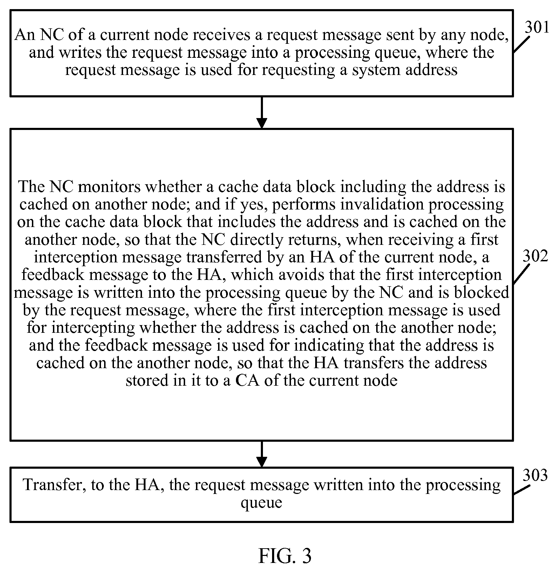

Referring to FIG. 3, FIG. 3 shows a method for preventing deadlock of a node controller according to Embodiment 1 of the present invention, where the method is applied to a NUMA system. As shown in FIG. 3, the method may include the following steps:
301: A node controller (NC) of a current node receives a request message sent by any node, and writes the request message into a processing queue, where the request message is used for requesting a system address.

In a NUMA system, a queuing policy is set on the NC, after the request message for requesting the system address is transferred to the NC, the NC needs to write the request message into the processing queue for queuing, and then performs processing according to processing permission (namely, a processing sequence).

In the NUMA system, any node may access a system memory according to the requested system address.

In the NUMA system, the current node may be a central processing unit (Central Processing Unit, CPU) or may be a symmetric multi-processing (Symmetric Multi Processing, SMP) system, which is not limited in the embodiments of the present invention.

302: The NC monitors whether a cache data block (Cache Line) including the system address is cached on another node; and if yes, performs invalidation processing on the cache data block which includes the system address and is cached on the another node, so that the NC directly returns, when receiving a first interception message transferred by an HA of the current node, a feedback message to the HA, avoiding that the first interception message is written into the processing queue by the NC and is blocked by the request message. The first interception message is used for intercepting whether the system address is cached on the another node; and the feedback message is used for indicating that the system address cached on the another node is invalid, so that the HA transfers the system address stored in it to a CA of the current node.

In the NUMA system, the another node may be a CPU, or may be an SMP system, which is not limited in the embodiments of the present invention.

As an optional implementation manner, an implementation procedure that the NC monitors whether the cache data block including the system address is cached on the another node may include the following steps:
A1. The NC transfers a second interception message SnpData to the another node, where the second interception message SnpData is used for monitoring whether the cache data block including the system address is cached on the another node.
B1. The NC receives a response message RapS transferred by the another node, where the response message RapS is used for indicating whether the cache data block including the system address is cached on the another node.

It may be seen that, through step A1 and step B1, the NC may implement the monitoring on the another node to learn whether the cache data block including the foregoing system address is cached on the another node.

As an optional implementation manner, an implementation procedure that the NC performs the invalidation processing on the cache data block that includes the system address and is cached on the another node may be:
The NC transfers an indication message SnpInvXtoI to the another node, where the indication message SnpInvXtoI is used for indicating that the another node deletes the cache data block that includes the system address and is cached in it or sets the cache data block to be unavailable.

Further, the NC may also receive an indication response message RspI transferred by the another node, and the indication response message RspI is transferred after the another node, according to the indication of the indication message SnpInvXtoI, deletes the cache data block that includes the system address and is cached in it or sets the cache data block to be unavailable.

In the NUMA system, after receiving the indication message SnpInvXtoI transferred by the NC, the another node may, according to the indication of the indication message SnpInvXtoI, delete the cache data block that includes the system address and is cached in it or set the cache data block to be unavailable. A specific implementation manner that the another node deletes the cache data block that includes the system address and is cached in it or sets the cache data block to be unavailable is common knowledge for persons skilled in the art, which is not introduced in detail here in the embodiments of the present invention.

The NC may learn, after receiving the indication response message RspI transferred by the another node, that the another node already performs the invalidation processing on the cache data block that includes the system address and is cached in it, so that even if receiving the first interception message transferred by the HA of the current node in the subsequent procedure, the NC does not need to transfer the first interception message to the another node, which avoids that the first interception message is written into the processing queue by the NC and is blocked by the request message.

303. The NC transfers, to the HA, the request message written into the processing queue.

In this embodiment, the NC may transfer, after monitoring that the cache data block including the system address is cached on the another node and performing the invalidation processing on the cache data block that includes the system address and is cached on the another node, according to the processing permission (that is, the processing sequence), the request message written into the processing queue to the HA of the current node, so that the HA may transfer, according to the request of the request message, the stored system address to the NC, and then the NC transfers the system address to a second node, so that the second node may adopt the system address to access the system memory.

In this embodiment, the NC may transfer, after receiving the first interception message transferred by the HA, the feedback message to the HA, so that the HA learns, according to an indication of the feedback message, that the system address cached in the another node is invalid, so that the HA may transfer, to the CA, the system address stored in it, and the CA may adopt the system address to access the system memory, thereby satisfying a requirement of a cache coherence protocol of the NUMA system.

In this embodiment, if the NC monitors that no cache data block including the system address is cached on the another node, the NC may also transfer, after receiving the first interception message transferred by the HA, the feedback message to the HA, so that the HA may transfer, to the CA, the system address stored in it, thereby finishing a handshaking process. The NC also does not need to transfer the first interception message to the another node, and may therefore avoid that the first interception message is written into the processing queue and is blocked by the request message, thereby avoiding the crash of the NUMA system due to the deadlock occurring to the NC.

In this embodiment, a sequence in which the NC transfers the request message and receives the first interception message is not limited, as long as the NC performs, before receiving the first interception message, the invalidation processing on the cache data block that includes the system address and is cached on the another node. In this embodiment, the NC already learns in advance that the another node already performs the invalidation processing on the cache data block that includes the system address and is cached in it, so that the NC does not need to transfer, upon receiving the first interception message transferred by the HA, the first interception message to the another node, thereby avoiding that the first interception message is written into the processing queue by the NC and is blocked by the request message. As the deadlock occurs because of a blocking loop of mutual dependence formed between the NC and the HA, the blocking loop causing the deadlock is broken accordingly as long as it is avoided on the NC that the first interception message is blocked by the request message, thereby further avoiding the crash of the NUMA system due to the deadlock occurring to the NC.

In this embodiment, the request message transferred by the CA is used for requesting the system address, that is to say, the request messages transferred by the CA and any node request the same system address, so that the CA and any node use the same system address, thereby satisfying the requirement of the cache coherence protocol of the NUMA system. The system address requested by the request messages transferred by the CA and any node may be any one of the multiple system addresses managed by the HA.

In the embodiment of the present invention, the node controller of the current node first monitors, after receiving the request message sent by any node and writing the request message into the processing queue, whether the cache data block including the system address is cached on another node. If it is found through monitoring that the cache data block including the system address is cached on another node, the node controller performs the invalidation processing on the cache data block that includes the system address and is cached on the another node. When subsequently the node controller receives the first interception message transferred by the home agent of the current node, as the node controller has already invalidated the cache data block that includes the system address and is cached on the another node, the node controller does not need to transfer the first interception message to the another node and only needs to directly return the feedback message to the HA, so as to avoid that the first interception message is written into the processing queue by the node controller and is blocked by the request message, thereby breaking the blocking loop in which the node controller and the HA depend on each other, preventing the deadlock from occurring to the node controller, and avoiding the crash of the NUMA system due to the deadlock occurring to the node controller.

### Embodiment 2

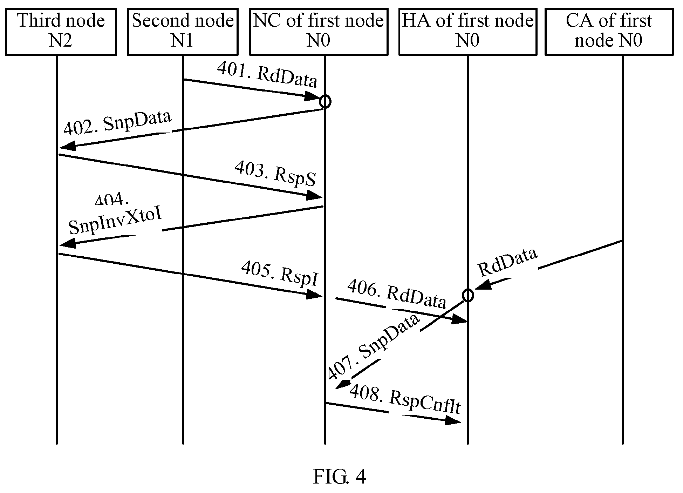

Referring to FIG. 4, FIG. 4 shows a method for preventing deadlock of a node controller according to Embodiment 2 of the present invention, where the method is applied to a NUMA system. In Embodiment 2, a NUMA system that satisfies a quick path interconnect (Quick Path Interconnect, QPI) protocol is taken as an example to introduce the method for preventing the deadlock of the node controller provided in the embodiment of the present invention. Further, in Embodiment 2, assume that a cache data block (Cache Line) including a system address A is cached in a third node N2 in the NUMA system. As shown in FIG. 4, the method may include the following steps:
401. An NC of a first node N0 receives a request message RdData for requesting a system address A, where the request message is transferred by a second node N1, and writes the request message RdData into a processing queue.
402. The NC of the first node N0 transfers an interception message SnpData to a third node N2, where the interception message SnpData is used for monitoring whether a cache data block including the system address A is cached on the third node N2.
403. The NC of the first node N0 receives a response message RapS transferred by the third node N2, where the response message RapS is used for indicating that the Cache Line including the system address A is cached on the third node N2.
404. The NC of the first node N0 transfers an indication message SnpInvXtoI to the third node N2, where the indication message SnpInvXtoI is used for indicating that the third node N2 performs invalidation processing on the Cache Line that includes the system address A and is cached in it.
405. The NC of the first node N0 receives an indication response message RspI transferred by the third node N2, where the indication response message RspI is transferred by the third node N2 after the third node N2 performs the invalidation processing, according to an indication of the indication message SnpInvXtoI, on the Cache Line that includes the system address A and is cached in it.

In this embodiment, that the third node N2 performs the invalidation processing on the Cache Line that includes the system address A and is cached in it refers to that the third node N2 deletes the Cache Line that includes the system address A and is cached in it or sets the Cache Line to be unavailable.

406. The NC of the first node N0 transfers the request message RdData, which is written into the processing queue, to the HA of the first node N0.

407. The NC of the first node N0 receives the interception message SnpData transferred by the HA of the first node N0, where the interception message SnpData transferred by the HA of the first node N0 is triggered and transferred by the HA of the first node N0 upon receiving the request message RdData for requesting the system address A, where the request message is transferred by the CA of the first node N0.

408. The NC of the first node N0 transfers immediately, upon receiving the interception message SnpData transferred by the HA of the first node N0, a feedback message RspCnfit to the HA of the first node N0.

In this embodiment, the HA of the first node N0 may write the request message RdData for requesting the system address A, where the request message is transferred by the CA, and the request message RdData transferred by the NC of the first node N0 into the processing queue for queuing and perform processing in sequence according to processing permission (namely, a processing sequence). Specifically, the HA of the first node N0 may transfer, according to the request message RdData transferred by the CA, the system address A to the CA; and transfer, according to the request message RdData transferred by the NC of the first node N0, the system address A to the NC of the first node N0, and then the NC of the first node N0 transfers the system address A to the second node N1.

In this embodiment, when the NC of the first node N0 receives the interception message SnpData transferred by the HA of the first node N0, the NC of the first node N0 already learns that the Cache Line with the system address A does not exist in all the nodes (that is, including the second node N1 and the third node N2) on the other side of the first node N0, therefore the NC of the first node N0 does not need to continue to transfer the interception message SnpData to the other side, and may transfer the feedback message RspCnfit to the HA of the first node N0, which avoids that the interception message SnpData is written into the processing queue by the NC of the first node N0 and is blocked by the request message RdData, thereby breaking a blocking loop of mutual dependence on the NC of the first node N0, and preventing the deadlock from occurring to the NC of the first node N0.

As an optional implementation manner, in this embodiment, in addition to the setting of the queuing policy on the NC of the first node N0, the following policy may also be set.

That is, when the NC of the first node N0 receives the request message for requesting the system address transferred by the another node, if a further request needs to be made to the HA of the first node N0 (the NC of the first node N0 cannot implement as an agent of the HA), all the Cache Lines including the system address one a side where another node locates have to be invalidated first before making a cross-domain request.

The so-called cross-domain request refers to that a request message for requesting a system address enters the HA of the first node N0 from the another node.

As shown in FIG. 4, the NC of the first node N0 finds, upon receiving the request message transferred by the second node N1, that it itself, as the HA agent, cannot satisfy the request, so that the NC of the first node N0 first invalidates, before making the cross-domain request, according to the foregoing set policy, the Cache Line with the system address A, where the Cache Line is cached on the third node N2 at the side of the second node N1. When the NC of the first node N0 receives the interception message transferred by the HA of the first node N0, although at this time the NC of the first node N0 is already processing the request message from the second node N1, the NC of the first node N0 may also transfer the feedback message to the HA of the first node for the interception message. Therefore, the HA of the first node N0 may first finish processing the request message from the CA and then continue to process the request message transferred by the NC of the first node N0.

In this embodiment, the NC of the first node N0 in the NUMA system first invalidates, upon receiving the request message transferred by the second node N1 and writing the request message into the processing queue, the Cache Line that includes the system address A and is cached on the third node N2; the NC then transfers the request message written into the processing queue to the HA of the first node N0. When the NC of the first node N0 receives the interception message transferred by the HA of the first node N0, the NC of the first node N0 has already invalidated the Cache Line that includes the system address A and is cached on the third node N2, so that the NC of the first node N0 does not need to continue to transfer the interception message to the third node N2, thereby avoiding that the interception message is written into the processing queue by the NC of the first node N0 and is blocked by the request message, breaking the blocking loop in which the NC of the first node N0 and the HA depend on each other, preventing the deadlock from occurring to the NC of the first node N0, and avoiding a crash of the NUMA system due to the deadlock occurring to the NC of the first node N0.

### Embodiment 3

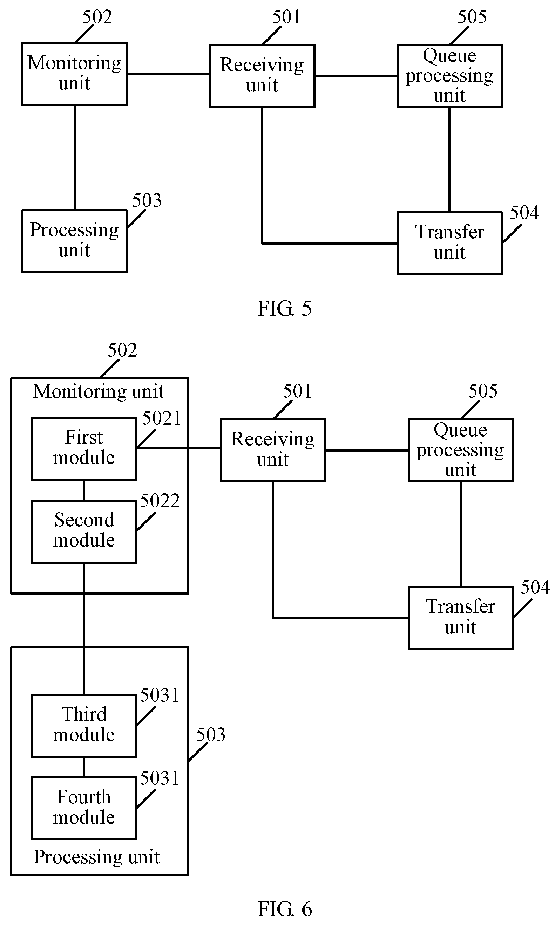

Referring to FIG. 5, FIG. 5 shows a node controller according to Embodiment 3 of the present invention, where the node controller is applied to a NUMA system. The node controller provided in this embodiment is located in a certain node in the NUMA system, and the node controller may include:
a receiving unit 501, configured to receive a request message sent by any node, and write the request message into a processing queue 505, where the request message is used for requesting a system address;
a monitoring unit 502, configured to monitor whether a cache data block including the system address is cached on another node;
a processing unit 503, configured to, when a monitoring result of the monitoring unit 502 is yes, perform invalidation processing on the cache data block that includes the system address and is cached on the another node, where
the receiving unit 501 is further configured to receive a first interception message transferred by a home agent of a current node, where the first interception message is used for intercepting whether the system address is cached on the another node;
a transfer unit 504, configured to, when the receiving unit 501 receives the first interception message, directly return a feedback message to the home agent, so as to avoid that the first interception message is written into a queue processing unit by the receiving unit 501 and is blocked by the request message, where the feedback message is used for indicating that the system address cached on the another node is invalid, so that the home agent transfers the system address stored in it to a caching agent of the current node; and
the queue processing unit 505, configured to store the request message written by the receiving unit 501, where
the transfer unit 504 is further configured to transfer, to the home agent, the request message written into the queue processing unit.

Referring to FIG. 6 together, FIG. 6 shows another node controller according to Embodiment 3 of the present invention, where the node controller is applied to the NUMA system. The node controller shown in FIG. 6 is obtained by optimizing the node controller shown in FIG. 5, and the node controller shown in FIG. 6 is also located in a certain node in the NUMA system. In the node controller shown in FIG. 6, the monitoring unit 502 may include:
a first module 5021, configured to transfer a second interception message to the another node, where the second interception message is used for monitoring whether the cache data block including the system address is cached on the another node; and
a second module 5022, configured to receive a response message transferred by the another node, where the response message is used for indicating whether the cache data block including the system address is cached on the another node.

Accordingly, the processing unit 503 is specifically configured to, when the response message received by the second module 5022 indicates that the cache data block including the system address is cached on a third node, perform invalidation processing on the cache data block that includes the system address and is cached on the third node.

Further, in the node controller shown in FIG. 6, the processing unit 503 may include:
a third module 5031, configured to transfer an indication message SnpInvXtoI to the another node, where the indication message SnpInvXtoI is used for indicating that the another node deletes the cache data block that includes the system address and is cached in it or sets the cache data block to be unavailable.

Further, in the node controller shown in FIG. 6, the processing unit 503 may further include:
a fourth module 5032, configured to receive an indication response message RspI transferred by the another node, where the indication response message RspI is transferred after the another node, according to the indication of the indication message SnpInvXtoI, deletes the cache data block that includes the system address and is cached in it or sets the cache data block to be unavailable.

In this embodiment, the home agent may transfer after learning, according to an indication of the feedback message returned by the transfer unit 504, that the system address is cached on the another node, to the caching agent, the system address stored by the home agent, so that the caching agent may adopt the system address to access the network.

In this embodiment, the request message transferred by the CA of the current node is also used for requesting the system address, that is to say, the system address requested by the CA is the same as the system address requested by the request message transferred by any node, so that the CA and any node use the same system address, thereby satisfying a requirement of a cache coherence protocol of the NUMA system.

In the NUMA system, the node may be a CPU, or may be an SMP system, which is not limited in the embodiments of the present invention.

In the embodiment of the present invention, the node controller of the current node first monitors, after receiving the request message sent by any node and writing the request message into the processing queue, whether the cache data block including the system address is cached on the another node. If it is found through monitoring that the cache data block including the system address is cached on the another node, the node controller performs the invalidation processing on the cache data block that includes the system address and is cached on the another node. When subsequently the node controller receives the first interception message transferred by the home agent of the current node, because the node controller has already invalidated the cache data block that includes the system address and is cached on the another node, the node controller does not need to transfer the first interception message to the another node and only needs to directly return the feedback message to the HA, thereby avoiding that the first interception message is written into the processing queue by the node controller and is blocked by the request message, breaking a blocking loop in which the node controller and the HA depend on each other, preventing the deadlock from occurring to the node controller, and avoiding a crash of the NUMA system due to the deadlock occurring to the node controller.

### Embodiment 4

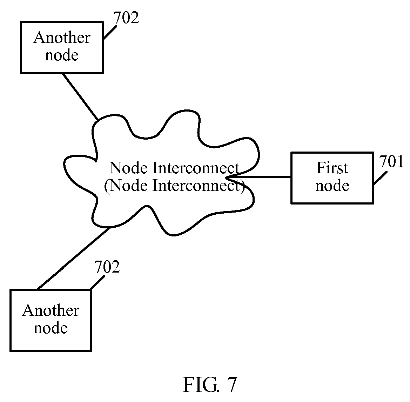

Referring to FIG. 7, FIG. 7 shows a NUMA system according to Embodiment 4 of the present invention. In the NUMA system shown in FIG. 7, the NUMA system includes a local node 701 and another node 702 other than the local node 701. A structure of the local node 701 is similar to the structure of the first node N0 in FIG. 1, and a difference lies in that a structure of the NC of the local node 701 is the same as the structure of the node controller shown in FIG. 5, or is the same as the structure of the node controller shown in FIG. 6.

The node controller of the local node 701 receives a request message of the another node 702 and writes the request message into a processing queue, where the request message is used for requesting a system address.

The node controller of the local node 701 monitors whether a cache data block including the system address is cached on the another node 702; and if yes, performs invalidation processing on the cache data block that includes the system address and is cached on the another node 702, so that the node controller directly returns, upon receiving a first interception message transferred by a home agent, a feedback message to the home agent, so as to avoid that the first interception message is written into a processing queue and is blocked by the request message. The first interception message is used for intercepting whether the system address is cached on the another node 702; and the feedback message is used for indicating that the system address cached on the another node 702 is invalid, so that the home agent transfers, to a caching agent, the system address stored in it, so that the node controller of the local node 701 transfers, to the home agent, the request message written into the processing queue.

The first interception message is transferred to the node controller by the home agent upon receiving the request message transferred by the caching agent, and the request message transferred by the caching agent is used for requesting the system address.

The system address requested by the caching agent is the same as the system address requested by the another node 702.

In this embodiment of the present invention, the node controller of the local node 701 first monitors, after receiving the request message sent by the another node 702 and writing the request message into the processing queue, whether the cache data block including the system address is cached on the another node 702. If it is found through monitoring that the cache data block including the system address is cached on the another node 702, the node controller performs the invalidation processing on the cache data block that includes the system address and is cached on the another node 702. When subsequently the node controller receives the first interception message transferred by the home agent, because the node controller has already invalidated the cache data block that includes the system address and is cached on the another node 702, the node controller does not needs to transfer the first interception message to the another node 702 and only needs to directly return the feedback message to the home agent, which avoids that the first interception message is written into the processing queue by the node controller and is blocked by the request message, breaks a blocking loop in which the node controller and the HA depend on each other, prevents deadlock from occurring to the node controller, and avoids a crash of the NUMA system due to the deadlock occurring to the node controller.

Persons of ordinary skill in the art may understand that, all or part of the steps of the foregoing method embodiments may be implemented by a program instructing relevant hardware. The program may be stored in a computer readable storage medium. When the program is executed, the steps of the foregoing method embodiments of the present invention are executed. The storage medium may be various media that may store program codes, such as a read-only memory (Read-Only Memory, ROM), a random access memory (Random Access Memory, RAM), a magnetic disk, or a compact disk, and so on.

The method for preventing deadlock of a node controller, the node controller, and the NUMA system provided in the embodiments of the present invention are introduced in detail in the foregoing. The principle and implementation manners of the present invention are described here through specific examples. The illustration about the foregoing embodiments is merely used for ease of understanding of the method and a core idea of the present invention.

## Claims

1. A method for preventing deadlock of a node controller in a non-uniform memory access system, comprising:
receiving (301), by a node controller of a current node, a request message, and writing the request message into a processing queue, wherein the request message is used for requesting a system address;
monitoring (302), by the node controller, whether a cache data block comprising the system address is cached on another node; and if yes, the node controller performing invalidation processing on the cache data block that comprises the system address and is cached on the another node;
returning directly, by the node controller, when receiving a first interception message transferred by a home agent of the current node, a feedback message to the home agent, so as to avoid that the first interception message is written into the processing queue and that the first interception message is blocked by the request message, wherein the first interception message is used for intercepting whether the system address is cached on the another node; and the feedback message is used for indicating that the system address cached on the another node is invalid, so that the home agent transfers the system address stored in it to a caching agent of the current node; and
transferring (303), by the node controller, the request message written into the processing queue to the home agent of the current node.

2. The method according to claim 1, wherein the step of monitoring (302) comprises:
transferring, by the node controller, to the another node, a second interception message, wherein the second interception message is used for monitoring whether the cache data block comprising the system address is cached on the another node; and
receiving, by the node controller, a response message transferred by the another node, wherein the response message is used for indicating whether the cache data block comprising the system address is cached on the another node.

3. The method according to claim 1 or 2, wherein the step of performing invalidation processing on the cache data block that comprises the system address and is cached on the another node comprises:
transferring, by the node controller, an indication message SnpInvXtoI to the another node, wherein the indication message SnpInvXtoI is used for indicating that the another node deletes the cache data block that comprises the system address and is cached in it or sets the cache data block to be unavailable.

4. The method according to claim 3, further comprising:
receiving, by the node controller, an indication response message RspI transferred by the another node, wherein the indication response message RspI is transferred after the another node, according to an indication of the indication message SnpInvXtoI, deletes the cache data block that comprises the system address and is cached in it or sets the cache data block to be unavailable.

5. The method according to claim 1 or 2, wherein the first interception message is transferred to the node controller by the home agent upon receiving the request message transferred by the caching agent of the current node, and the request message transferred by the caching agent is used for requesting the system address.

6. The method according to claim 1 or 2, wherein the current node is a central processing unit or a symmetric multi processing SMP system.

7. A node controller, applied to a non-uniform memory access system, wherein the node controller is located in a local node of the non-uniform memory access system, and the node controller comprises:
a receiving unit (501), configured to receive a request message sent by any node, and write the request message into a processing queue, wherein the request message is used for requesting a system address;
a monitoring unit (502), configured to monitor whether a cache data block comprising the system address is cached on another node;
a processing unit (503), configured to, when a monitoring result of the monitoring unit is yes, perform invalidation processing on the cache data block that comprises the system address and is cached on the another node, wherein
the receiving unit (501) is further configured to receive a first interception message transferred by a home agent of the local node, wherein the first interception message is used for intercepting whether the system address is cached on the another node;
a transfer unit (504), configured to, when the receiving unit receives the first interception message, directly return a feedback message to the home agent, so as to avoid that the first interception message is written into a queue processing unit (505) by the receiving unit (501) and that the first interception message is blocked by the request message, wherein the feedback message is used for indicating that the system address cached on the another node is invalid, so that the home agent transfers the system address stored in it to a caching agent of the local node; and
the queue processing unit (505), configured to store the request message written by the receiving unit, wherein
the transfer unit (504) is further configured to transfer, to the home agent, the request message written into the queue processing unit.

8. The node controller according to claim 7, wherein the monitoring unit (502) comprises:
a first module (5021), configured to transfer a second interception message to the another node, wherein the second interception message is used for monitoring whether the cache data block comprising the system address is cached on the another node; and
a second module (5022), configured to receive a response message transferred by the another node, wherein the response message is used for indicating whether the cache data block comprising the system address is cached on the another node.

9. The node controller according to claim 7 or 8, wherein the processing unit (503) comprises:
a third module (5031), configured to transfer, when the monitoring result of the monitoring unit is yes, an indication message SnpInvXtoI to the another node, wherein the indication message SnpInvXtoI is used for indicating that the another node deletes the cache data block that comprises the system address and is cached in it or sets the cache data block to be unavailable.

10. The node controller according to claim 9, wherein the processing unit (503) further comprises:
a fourth module (5031), configured to receive an indication response message RspI transferred by the another node, wherein the indication response message RspI is transferred after the another node, according to an indication of the indication message SnpInvXtoI, deletes the cache data block that comprises the system address and is cached in it or sets the cache data block to be unavailable.

11. The node controller according to claim 7 or 8, wherein the first interception message is transferred to the node controller by the home agent upon receiving the request message transferred by a caching agent of the local node, and the request message transferred by the caching agent is used for requesting the system address.

12. The node controller according to claim 7 or 8, wherein the local node is a central processing unit or a symmetric multi processing SMP system.

13. A non-uniform memory access system, comprising a local node (701) and another node (702) other than the local node, wherein the local node comprises a node controller according to claim 7, a home agent, and a caching agent.

14. The non-uniform memory access system according to claim 13, wherein the first interception message is transferred to the node controller by the home agent upon receiving the request message transferred by the caching agent, and the request message transferred by the caching agent is used for requesting the system address.

## Patentansprüche

1. Verfahren zur Vermeidung von Ausfällen einer Knotensteuerung in einem uneinheitlichen Speicherzugangssystem, umfassend:
Empfangen (301) einer Anforderungsmeldung durch eine Knotensteuerung eines aktuellen Knotens und Schreiben der Anforderungsmeldung in eine Verarbeitungswarteschlange, wobei die Anforderungsmeldung zum Anfordern einer Systemadresse verwendet wird;
Überwachen (302) durch die Knotensteuerung, ob ein Cache-Datenblock, der die Systemadresse umfasst, auf einem anderen Knoten cache-gespeichert ist; und wenn ja, Durchführen einer Annullierungsverarbeitung durch die Knotensteuerung an dem Cache-Datenblock, der die Systemadresse umfasst und auf dem anderen Knoten cache-gespeichert ist;
wenn eine erste Abhörmeldung empfangen wird, die von einem Home-Agenten des aktuellen Knotens übermittelt wird, direktes Zurücksenden einer Rückmeldung an den Home-Agenten durch die Knotensteuerung, um zu vermeiden, dass die erste Abhörmeldung in die Verarbeitungswarteschlange geschrieben wird und dass die erste Abhörmeldung durch die Anforderungsmeldung blockiert wird, wobei die erste Abhörmeldung zum Abhören verwendet wird, ob die Systemadresse auf dem anderen Knoten cache-gespeichert ist; und die Rückmeldung zum Anzeigen verwendet wird,
dass die auf dem anderen Knoten cache-gespeicherte Systemadresse ungültig ist, so dass der Home-Agent die darin gespeicherte Systemadresse zu einem Caching-Agenten des aktuellen Knotens übermittelt; und
Übermitteln (303) der in die Verarbeitungswarteschlange geschriebenen Anforderungsmeldung zu dem Home-Agenten des aktuellen Knotens durch die Knotensteuerung.

2. Verfahren nach Anspruch 1, wobei der Schritt des Überwachens (302) umfasst:
Übermitteln einer zweiten Abhörmeldung an den anderen Knoten durch die Knotensteuerung, wobei die zweite Abhörmeldung zum Überwachen verwendet wird, ob der Cache-Datenblock, der die Systemadresse umfasst, auf dem anderen Knoten cache-gespeichert ist; und
Empfangen einer Antwortmeldung, die von dem anderen Knoten übermittelt wird, durch die Knotensteuerung, wobei die Antwortmeldung zum Anzeigen verwendet wird, ob der Cache-Datenblock, der die Systemadresse umfasst, auf dem anderen Knoten cache-gespeichert ist.

3. Verfahren nach Anspruch 1 oder 2, wobei der Schritt des Durchführens einer Annullierungsverarbeitung an dem Cache-Datenblock, der die Systemadresse umfasst und auf dem anderen Knoten cache-gespeichert ist, umfasst:
Übermitteln einer Anzeigemeldung SnpInvXtoI an den anderen Knoten durch die Knotensteuerung, wobei die Anzeigemeldung SnpInvXtoI zum Anzeigen verwendet wird, dass der andere Knoten den Cache-Datenblock, der die Systemadresse umfasst und darin cache-gespeichert ist, löscht oder den Cache-Datenblock auf nicht verfügbar stellt.

4. Verfahren nach Anspruch 3, ferner umfassend:
Empfangen einer Anzeigeantwortmeldung RspI, die von dem anderen Knoten übermittelt wird, durch die Knotensteuerung, wobei die Anzeigeantwortmeldung RspI übermittelt wird, nachdem der andere Knoten gemäß einer Anzeige der Anzeigemeldung SnpInvXtoI den Cache-Datenblock, der die Systemadresse umfasst und darin cache-gespeichert ist, löscht oder den Cache-Datenblock auf nicht verfügbar stellt.

5. Verfahren nach Anspruch 1 oder 2, wobei die erste Abhörmeldung nach dem Empfangen der Anforderungsmeldung, die von dem Caching-Agenten des aktuellen Knotens übermittelt wird, von dem Home-Agenten zu der Knotensteuerung übermittelt wird und die von dem Caching-Agenten übermittelte Anforderungsmeldung zum Anfordern der Systemadresse verwendet wird.

6. Verfahren nach Anspruch 1 oder 2, wobei es sich bei dem aktuellen Knoten um eine Zentralprozessoreinheit oder ein symmetrisches Multiprozessorsystem, SMP-System, handelt.

7. Knotensteuerung, angewendet auf ein uneinheitliches Speicherzugangssystem, wobei die Knotensteuerung in einem lokalen Knoten des uneinheitlichen Speicherzugangssystems angeordnet ist und die Knotensteuerung umfasst:
eine Empfangseinheit (501), welche dafür konfiguriert ist, eine Anforderungsmeldung zu empfangen, die von einem beliebigen Knoten gesendet wird, und die Anforderungsmeldung in eine Verarbeitungswarteschlange zu schreiben, wobei die Anforderungsmeldung zum Anfordern einer Systemadresse verwendet wird;
eine Überwachungseinheit (502), welche dafür konfiguriert ist, zu überwachen, ob ein Cache-Datenblock, der die Systemadresse umfasst, auf einem anderen Knoten cache-gespeichert ist;
eine Verarbeitungseinheit (503), welche dafür konfiguriert ist, wenn ein Überwachungsergebnis der Überwachungseinheit positiv ist, eine Annullierungsverarbeitung an dem Cache-Datenblock durchzuführen, der die Systemadresse umfasst und auf dem anderen Knoten cache-gespeichert ist, wobei die Empfangseinheit (501) ferner dafür konfiguriert ist, eine erste Abhörmeldung zu empfangen, die von einem Home-Agenten des lokalen Knotens übermittelt wird,
wobei die erste Abhörmeldung zum Abhören verwendet wird, ob die Systemadresse auf dem anderen Knoten cache-gespeichert ist;
eine Übermittlungseinheit (504), welche dafür konfiguriert ist, wenn die Empfangseinheit die erste Abhörmeldung empfängt, direkt eine Rückmeldung an den Home-Agenten zurückzusenden, um zu vermeiden, dass die erste Abhörmeldung von der Empfangseinheit (501) in eine Warteschlangen-Verarbeitungseinheit (505) geschrieben wird und dass die erste Abhörmeldung durch die Anforderungsmeldung blockiert wird, wobei die Rückmeldung zum Anzeigen verwendet wird, dass die auf dem anderen Knoten cache-gespeicherte Systemadresse ungültig ist, so dass der Home-Agent die darin gespeicherte Systemadresse zu einem Caching-Agenten des lokalen Knotens übermittelt; und
die Warteschlangen-Verarbeitungseinheit (505), welche dafür konfiguriert ist, die von der Empfangseinheit geschriebene Anforderungsmeldung zu speichern, wobei die Übermittlungseinheit (504) ferner dafür konfiguriert ist, die in die Warteschlangen-Verarbeitungseinheit geschriebene Anforderungsmeldung zu dem Home-Agenten zu übermitteln.

8. Knotensteuerung nach Anspruch 7, wobei die Überwachungseinheit (502) umfasst:
ein erstes Modul (5021), welches dafür konfiguriert ist, eine zweite Abhörmeldung an den anderen Knoten zu übermitteln, wobei die zweite Abhörmeldung zum Überwachen verwendet wird, ob der Cache-Datenblock, der die Systemadresse umfasst, auf dem anderen Knoten cache-gespeichert ist; und
ein zweites Modul (5022), welches dafür konfiguriert ist, eine Antwortmeldung zu empfangen, die von dem anderen Knoten übermittelt wird, wobei die Antwortmeldung zum Anzeigen verwendet wird, ob der Cache-Datenblock, der die Systemadresse umfasst, auf dem anderen Knoten cache-gespeichert ist.

9. Knotensteuerung nach Anspruch 7 oder 8, wobei die Verarbeitungseinheit (503) umfasst:
ein drittes Modul (5031), welches dafür konfiguriert ist, wenn das Überwachungsergebnis der Überwachungseinheit positiv ist, eine Anzeigemeldung SnpInvXtoI an den anderen Knoten zu übermitteln, wobei die Anzeigemeldung SnpInvXtoI zum Anzeigen verwendet wird, dass der andere Knoten den Cache-Datenblock, der die Systemadresse umfasst und darin cache-gespeichert ist, löscht oder den Cache-Datenblock auf nicht verfügbar stellt.

10. Knotensteuerung nach Anspruch 9, wobei die Verarbeitungseinheit (503) ferner umfasst:
ein viertes Modul (5031), welches dafür konfiguriert ist, eine Anzeigeantwortmeldung RspI zu empfangen, die von dem anderen Knoten übermittelt wird, wobei die Anzeigeantwortmeldung RspI übermittelt wird, nachdem der andere Knoten gemäß einer Anzeige der Anzeigemeldung SnpInvXtoI den Cache-Datenblock, der die Systemadresse umfasst und darin cache-gespeichert ist, löscht oder den Cache-Datenblock auf nicht verfügbar stellt.

11. Knotensteuerung nach Anspruch 7 oder 8, wobei die erste Abhörmeldung nach dem Empfangen der Anforderungsmeldung, die von einem Caching-Agenten des lokalen Knotens übermittelt wird, von dem Home-Agenten zu der Knotensteuerung übermittelt wird und die von dem Caching-Agenten übermittelte Anforderungsmeldung zum Anfordern der Systemadresse verwendet wird.

12. Knotensteuerung nach Anspruch 7 oder 8, wobei es sich bei dem lokalen Knoten um eine Zentralprozessoreinheit oder ein symmetrisches Multiprozessorsystem, SMP-System, handelt.

13. Uneinheitliches Speicherzugangssystem, umfassend einen lokalen Knoten (701) und einen anderen Knoten (702) als den lokalen Knoten, wobei der lokale Knoten eine Knotensteuerung nach Anspruch 7, einen Home-Agenten und einen Caching-Agenten umfasst.

14. Uneinheitliches Speicherzugangssystem nach Anspruch 13, wobei die erste Abhörmeldung nach dem Empfangen der Anforderungsmeldung, die von dem Caching-Agenten übermittelt wird, von dem Home-Agenten zu der Knotensteuerung übermittelt wird und die von dem Caching-Agenten übermittelte Anforderungsmeldung zum Anfordern der Systemadresse verwendet wird.

## Revendications

1. Procédé pour empêcher l'interblocage d'un contrôleur de noeud dans un système d'accès en mémoire non uniforme, le procédé comprenant les étapes consistant à :
recevoir (301), par un contrôleur de noeud d'un noeud courant, un message de demande, et écrire le message de demande dans une file d'attente de traitement, lequel message de demande sert à demander une adresse système ;
surveiller (302), par le contrôleur de noeud, si un bloc de données de cache comprenant l'adresse système est mis en cache sur un autre noeud ; et, dans l'affirmative, exécuter, par le contrôleur de noeud, un traitement d'invalidation sur le bloc de données de cache qui comprend l'adresse système et qui est mis en cache sur l'autre noeud ;
renvoyer directement, par le contrôleur de noeud, dès réception d'un premier message d'interception transféré par un agent de rattachement du noeud courant, un message de retour d'information à l'agent de rattachement, de manière à éviter que le premier message d'interception ne soit écrit dans la file d'attente de traitement et que le premier message d'interception ne soit bloqué par le message de demande, lequel premier message d'interception sert à intercepter si l'adresse système est mise en cache sur l'autre noeud ; et lequel message de retour d'information sert à indiquer que l'adresse système mise en cache sur l'autre noeud est invalide de façon à ce que l'agent de rattachement transfère l'adresse système qui y est enregistrée vers un agent de mise en cache du noeud courant ; et
transférer (303), par le contrôleur de noeud, le message de demande écrit dans la file d'attente de traitement vers l'agent de rattachement du noeud courant.

2. Procédé selon la revendication 1, dans lequel l'étape consistant à surveiller (302) comprend les étapes consistant à :
transférer, par le contrôleur de noeud, vers l'autre noeud, un deuxième message d'interception, lequel deuxième message d'interception sert à surveiller si le bloc de données de cache comprenant l'adresse système est mis en cache sur l'autre noeud ; et
recevoir, par le contrôleur de noeud, un message de réponse transféré par l'autre noeud, lequel message de réponse sert à indiquer si le bloc de données de cache comprenant l'adresse système est mis en cache sur l'autre noeud.

3. Procédé selon la revendication 1 ou 2, dans lequel l'étape consistant à exécuter un traitement d'invalidation sur le bloc de données de cache qui comprend l'adresse système et qui est mis en cache sur l'autre noeud comprend l'étape consistant à :
transférer, par le contrôleur de noeud, un message d'indication SnpInvXtoI vers l'autre noeud, lequel message d'indication SnpInvXtoI sert à indiquer que l'autre noeud supprime le bloc de données de cache qui comprend l'adresse système et qui y est mis en cache ou définit le bloc de données de cache comme étant indisponible.

4. Procédé selon la revendication 3, comprenant en outre l'étape consistant à :
recevoir, par le contrôleur de noeud, un message de réponse d'indication RspI transféré par l'autre noeud, lequel message de réponse d'indication RspI est transféré après que l'autre noeud, selon une indication du message d'indication SnpInvXtoI, a supprimé le bloc de données de cache qui comprend l'adresse système et qui y est mis en cache ou a défini le bloc de données de cache comme étant indisponible.

5. Procédé selon la revendication 1 ou 2, dans lequel le premier message d'interception est transféré vers le contrôleur de noeud par l'agent de rattachement dès réception du message de demande transféré par l'agent de mise en cache du noeud courant, et le message de demande transféré par l'agent de mise en cache sert à demander l'adresse système.

6. Procédé selon la revendication 1 ou 2, dans lequel le noeud courant est une unité centrale de traitement ou un système de multitraitement symétrique SMP.

7. Contrôleur de noeud, appliqué à un système d'accès en mémoire non uniforme, lequel contrôleur de noeud est implanté dans un noeud local du système d'accès en mémoire non uniforme, et lequel contrôleur de noeud comprend :
une unité de réception (501), configurée pour recevoir un message de demande envoyé par un noeud quelconque, et écrire le message de demande dans une file d'attente de traitement, lequel message de demande sert à demander une adresse système ;
une unité de surveillance (502), configurée pour surveiller si un bloc de données de cache comprenant l'adresse système est mis en cache sur un autre noeud ;
une unité de traitement (503), configurée, en cas de résultat de surveillance affirmatif de l'unité de surveillance, pour exécuter un traitement d'invalidation sur le bloc de données de cache qui comprend l'adresse système et qui est mis en cache sur l'autre noeud,
l'unité de réception (501) étant configurée en outre pour recevoir un premier message d'interception transféré par un agent de rattachement du noeud local, lequel premier message d'interception sert à intercepter si l'adresse système est mise en cache sur l'autre noeud ;
une unité de transfert (504), configurée, lorsque l'unité de réception reçoit le premier message d'interception, pour renvoyer directement un message de retour d'information à l'agent de rattachement, de manière à éviter que le premier message d'interception ne soit écrit dans une unité de traitement de file d'attente (505) par l'unité de réception (501) et que le premier message d'interception ne soit bloqué par le message de demande, lequel message de retour d'information sert à indiquer que l'adresse système mise en cache sur l'autre noeud est invalide de façon à ce que l'agent de rattachement transfère l'adresse système qui y est enregistrée vers un agent de mise en cache du noeud local ; et
l'unité de traitement de file d'attente (505), configurée pour enregistrer le message de demande écrit par l'unité de réception,
l'unité de transfert (504) étant configurée en outre pour transférer, vers l'agent de rattachement, le message de demande écrit dans l'unité de traitement de file d'attente.

8. Contrôleur de noeud selon la revendication 7, dans lequel l'unité de surveillance (502) comprend :
un premier module (5021), configuré pour transférer vers l'autre noeud un deuxième message d'interception, lequel deuxième message d'interception sert à surveiller si le bloc de données de cache comprenant l'adresse système est mis en cache sur l'autre noeud ; et
un deuxième module (5022), configuré pour recevoir un message de réponse transféré par l'autre noeud, lequel message de réponse sert à indiquer si le bloc de données de cache comprenant l'adresse système est mis en cache sur l'autre noeud.

9. Contrôleur de noeud selon la revendication 7 ou 8, dans lequel l'unité de traitement (503) comprend :
un troisième module (5031), configuré pour transférer, en cas de résultat de surveillance affirmatif de l'unité de surveillance, un message d'indication SnpInvXtoI vers l'autre noeud, lequel message d'indication SnpInvXtoI sert à indiquer que l'autre noeud supprime le bloc de données de cache qui comprend l'adresse système et qui y est mis en cache ou définit le bloc de données de cache comme étant indisponible.

10. Contrôleur de noeud selon la revendication 9, dans lequel l'unité de traitement (503) comprend en outre :
un quatrième module (5031), configuré pour recevoir un message de réponse d'indication RspI transféré par l'autre noeud, lequel message de réponse d'indication RspI est transféré après que l'autre noeud, selon une indication du message d'indication SnpInvXtoI, a supprimé le bloc de données de cache qui comprend l'adresse système et qui y est mis en cache ou a défini le bloc de données de cache comme étant indisponible.

11. Contrôleur de noeud selon la revendication 7 ou 8, dans lequel le premier message d'interception est transféré vers le contrôleur de noeud par l'agent de rattachement dès réception du message de demande transféré par un agent de mise en cache du noeud local, et le message de demande transféré par l'agent de mise en cache sert à demander l'adresse système.

12. Contrôleur de noeud selon la revendication 7 ou 8, dans lequel le noeud local est une unité centrale de traitement ou un système de multitraitement symétrique SMP.

13. Système d'accès en mémoire non uniforme, comprenant un noeud local (701) et un autre noeud (702) autre que le noeud local, lequel noeud local comprend un contrôleur de noeud selon la revendication 7, un agent de rattachement et un agent de mise en cache.

14. Système d'accès en mémoire non uniforme selon la revendication 13, dans lequel le premier message d'interception est transféré vers le contrôleur de noeud par l'agent de rattachement dès réception du message de demande transféré par l'agent de mise en cache, et le message de demande transféré par l'agent de mise en cache sert à demander l'adresse système.
